# DEMANDE DE BREVET EUROPEEN

(11) **EP 1 204 044 A1**
(43) Date de publication de la demande: **08.05.2002**
(21) Numéro de dépôt: 01460056.3
(22) Date de dépôt: 27.09.2001
(51) Int. Cl.: G06F 17/30

(54) **Procédé et système d'optimisation de consultations d'ensembles de données par une pluralité de clients**

(30) Priorité: 29.09.2000 FR 0012492
(71) Demandeur: Cegetel Groupe, 92915 Paris La Défense (FR)
(72) Inventeur: Bouthors, Nicolas M., 38240 Meylan (FR)
(74) Mandataire: Vidon, Patrice

(57) **Abrégé**

L'invention concerne un procédé de consultation de données sur au moins un terminal (100) par au moins un utilisateur, les données consultées (200) se présentant sous la forme de pages téléchargées depuis des sites distants (101) et/ou disponibles sur un support de données, comprenant une étape de personnalisation des pages, mettant en oeuvre au moins une base de données d'annotations, indépendante des pages, l'étape de personnalisation comprenant elle-même les étapes suivantes:
- association dans la base de données d'annotations d'au moins une donnée de référence susceptible d'être détectée parmi les données consultées, à au moins une annotation ;
- recherche d'au moins une donnée de référence (202, 203) dans les pages (200), ou dans au moins une portion des pages (200); et
- proposition systématique, lorsqu'une des données de référence est détectée lors de l'étape de recherche parmi les données consultées, de l'annotation (300) associée dans la base de données d'annotations à la donnée de référence détectée (202, 203).

## Description

Le domaine de l'invention est celui de la consultation de données sur un terminal de client, tel un radio-téléphone ou un micro-ordinateur, ces données étant issues d'un médium quelconque tel que notamment un support amovible ou un réseau de communication.

Plus précisément, l'invention concerne l'optimisation de consultations d'ensembles de données par une pluralité de clients et en particulier l'adaptation de ces données à un client (utilisateur) particulier.

Le réseau de communication peut notamment, mais non exclusivement, être un réseau de type internet, tel que le réseau mondial Internet. Dans ce cas, les données sont téléchargées à partie de liens d'accès qui sont des adresses-destinations (ou adresses URL, pour "Uniform Ressource Locator" en anglais) vers des pages d'informations (ou pages Web).

En outre, la présente invention s'applique non seulement lorsque le terminal accède directement au réseau de communication, mais aussi lorsqu'il y accède par l'intermédiaire d'au moins un autre réseau de télécommunication, auquel il est abonné. Cet autre réseau de télécommunication est par exemple le réseau téléphonique commuté ("réseau fixe") et/ou un réseau de radiocommunication ("réseau mobile").

Dans le cas d'un réseau de radiocommunication, celui-ci utilise par exemple la norme GSM (pour "Global System for Mobile communications" en anglais), ou une norme équivalente ou concurrente telle que DCS 1800 (pour "Digital Cellular à 1800 MHz", en anglais), PCS 1900 (pour "Personal Communication System à 1900 MHz" en anglais), DECT (pour "Digital European Cordless Telecommunications" en anglais), GPRS (pour "General Packet Radio Service" en anglais) ou UMTS (pour "Universal Mobile Telecommunication System" en anglais).

Afin de montrer les inconvénients de l'art antérieur en terme de consultation de données, on rappelle maintenant les principes de la technique actuelle de consultation de données issues d'une page Web, au sein du réseau Internet. Classiquement, une page Web peut être associée soit à un site (page d'accueil), soit à une partie d'un site (autre(s) page(s) du site). Chaque page Web peut éventuellement aussi correspondre à un service d'un site.

Il est clair que les inconvénients qui vont être décrits à travers un exemple illustratif sont communs aux autres techniques de consultation de données de l'art antérieur.

On suppose que le client considéré accède à un réseau de télécommunication interconnecté au réseau Internet. Via son terminal (ou "équipement de réseau"), il fait une demande de connexion au réseau Internet auprès de son fournisseur d'accès (ou "provider"), qui se charge alors d'assurer une communication entre le terminal du client et le réseau Internet. Après que cette communication est établie, le client peut accéder aux différentes pages Web, selon un mode client-serveur. Il dispose pour cela d'un logiciel client compris dans son terminal, à savoir un navigateur (ou "browser"), présentant notamment un mode de fonctionnement direct et un mode de fonctionnement indirect.

Dans le mode de fonctionnement direct, le navigateur utilise des adresses URL que l'utilisateur connaît et communique directement au navigateur.

Dans le mode de fonctionnement indirect, le navigateur utilise des liens hypertextes (ou hyperliens) contenus dans une autre page Web, affichée à l'écran du terminal. Chaque hyperlien comprend d'une part une adresse URL et une zone de lien hypertexte (image et/ou texte) contenue dans la page Web affichée à l'écran du terminal.

Après que le client a fourni une adresse URL, directement par saisie (mode direct) ou indirectement en cliquant sur une zone de lien hypertexte correspondant à une page Web de son choix (mode indirect), le navigateur émet une requête contenant l'adresse URL correspondante. Dans les deux cas, on parle de l'activation du lien d'accès que constitue l'adresse URL.

Cette requête est reçue par le serveur contenant la page Web recherchée (c'est-à-dire dont l'adresse URL a été fournie), afin que par retour cette page Web soit expédiée par le serveur sur le réseau, dans un langage spécial, HTML (pour "Hypertext MarkUp Language" en anglais). Ce langage contient des instructions (balises) indiquant au navigateur du terminal client comment organiser la page Web à son arrivée.

L'utilisation classique des adresses URL, telle que décrite ci-dessus, présente plusieurs inconvénients et ne permet pas de répondre à tous les besoins.

Tout d'abord, la présentation des informations se fait selon des critères propres à l'auteur des pages de données consultées et ne tient pas compte des besoins du client. Ainsi, l'auteur des pages de données consultées peut détailler un point qui n'intéresse pas le client et au contraire survoler un point important pour le client.

Par ailleurs, l'information donnée par les pages de données consultées est le plus souvent subjective. Le client ne dispose pas d'élément critique qui lui permette de mesurer l'intérêt et la qualité du site ou des pages consultés et de se former un jugement sur les données consultées.

En outre, quand le client désire obtenir des informations à partir de site web qu'il ne connaît pas, il peut utiliser des moteurs de recherche par mots clés mais ces outils ne sont qu'une aide à la recherche ; le client doit souvent faire face à une difficulté d'identification des mots clés adéquats qui lui permettront d'accéder le plus efficacement possible aux données recherchées. Le résultat d'une recherche est fréquemment inadapté à la requête du client qui peut obtenir une multitude inextricable de références plus ou moins intéressantes ou au contraire peu ou pas de références. Le client a ainsi une grande difficulté pour trouver les données pertinentes qu'il recherche.

Ce qui précède concernant la consultation de données à partir du web s'applique bien sûr, plus généralement, à la consultation de tout type d'information, notamment à la consultation de données présentes sur un médium amovible tel un CD-ROM ou un DVD-ROM.

En outre, l'utilisation classique des adresses URL ne permet pas de faire, de façon automatique, un filtrage des données pertinentes pour un client.

L'invention a notamment pour objectif de pallier ces différents inconvénients de l'état de la technique.

Plus précisément, l'un des objectifs de la présente invention est de fournir une technique de consultation de données présentes sur un médium et/ou sur un réseau de communication, et adaptée à chaque (ou au moins à certains) clients.

Un autre objectif de l'invention est de fournir à un client des données sélectionnées pour ce client en fonction de ses besoins, de ses choix, de ses indications...

L'invention a également pour objectif de tenir compte des données consultées pour proposer à la volée des données complémentaires pertinentes.

L'invention a également pour objectif de fournir une telle technique qui soit simple à mettre en oeuvre et peu coûteuse.

Un autre objectif de l'invention est de fournir une telle technique dont une des variantes de réalisation ne nécessite aucune modification des terminaux des clients.

Encore un autre objectif de l'invention est de permettre à un opérateur ou gestionnaire de site Internet la fourniture d'un service à haute valeur ajoutée.

Ces différents objectifs, ainsi que d'autres qui apparaîtront par la suite, sont atteints selon l'invention à l'aide d'un procédé de consultation de données sur au moins un terminal par au moins un utilisateur, les données consultées se présentant sous la forme de pages téléchargées depuis des sites distants et/ou disponibles sur un support de données, remarquable en ce qu'il comprend une étape de personnalisation des pages, mettant en oeuvre au moins une base de données d'annotations, indépendante des pages, l'étape de personnalisation comprenant elle-même les étapes suivantes:
- association dans la base de données d'annotations d'au moins une donnée de référence susceptible d'être détectée parmi les données consultées, à au moins une annotation ;
- recherche d'au moins une donnée de référence dans les pages, ou dans au moins une portion des pages ; et
- proposition systématique, lorsqu'une des données de référence est détectée lors de l'étape de recherche parmi les données consultées, de la au moins une annotation associée dans la base de données d'annotations à la donnée de référence détectée.

Par "page", on entend non seulement une page Web, mais plus généralement tout type de document informatique, contenant des données de textes et/ou d'images et/ou de sons.

Par "support de données", on entend notamment, mais non exclusivement un CD-ROM, une disquette, un disque dur de l'équipement client, ...

On note que dans la « base de données d'annotations », peuvent figurer des annotations et/ou des références d'annotations (notamment des adresses URL ou des index dans une table d'annotations).

Ainsi, l'invention permet un enrichissement des données consultées par des annotations pertinentes qui sont, par exemple, proposées à la volée.

Selon une caractéristique particulière, le procédé de consultation est remarquable en ce que l'étape d'association d'au moins une donnée de référence à au moins une annotation comprend une étape d'association d'au moins un critère de liaison sémantique constitué d'au moins un mot de référence, à chaque annotation de la base de données d'annotations ; et en ce que l'étape de recherche comprend en une étape de recherche d'au moins une liaison sémantique du critère de liaison sémantique, à la donnée de référence susceptible d'être détectée parmi les données consultées.

Ainsi, l'enrichissement des données se fait avantageusement sur des bases de liaison sémantique, c'est-à-dire sur la signification même des données consultées.

Selon une caractéristique particulière, le procédé de consultation est remarquable en ce que l'étape d'association d'au moins une donnée de référence à au moins une annotation comprend une étape de construction de la base de données d'annotation à partir de données fournies par au moins un créateur d'annotations.

Les données « fournies » s'entendent ici comme des données qui sont :
- effectivement fournies à l'initiative d'un créateur d'annotations ; et/ou
- collectées auprès d'un créateur d'annotations.

Ainsi, les annotations sont fournies par un créateur d'annotations qui est généralement indépendant du site distant dont sont issues les données consultées. De cette manière, les données consultées peuvent être enrichies avantageusement d'annotations critiques et/ou à forte valeur ajoutée.

Selon une caractéristique particulière, le procédé de consultation est remarquable en ce que l'étape de proposition comprend au moins une des étapes suivantes :
- indication de la possibilité de fournir une annotation associée à la au moins une donnée de référence détectée lors de l'étape de recherche ;
- fourniture proprement dite d'une annotation associée à la au moins une donnée de référence détectée lors de l'étape de recherche, sur requête de l'utilisateur.

Ainsi, de manière avantageuse, chaque annotation est avantageusement proposée à l'utilisateur du terminal avant d'être présentée (l'utilisateur ayant alors la possibilité de refuser l'annotation) ou présentée directement. Ceci procure une grande souplesse d'utilisation.

Selon une caractéristique particulière, le procédé de consultation est remarquable en ce que le procédé comprend en outre, pour chaque utilisateur, les étapes suivantes :
- définition d'un profil de l'utilisateur permettant de limiter les annotations mises à la disposition de l'utilisateur, à des annotations sélectionnées faisant partie d'un groupe spécifique de sélection comprenant des annotations susceptibles d'intéresser l'utilisateur ; et
- sélection des annotations en fonction du profil de l'utilisateur, de sorte que seules les annotations sélectionnées sont proposées au utilisateur lors de l'étape de proposition.

Ainsi, le profil pouvant définir notamment un identifiant de l'utilisateur et/ou ses sujets d'intérêt, les annotations sont avantageusement personnalisées en fonction de chaque utilisateur de terminal à qui elles sont destinées.

Selon une caractéristique particulière, le procédé de consultation est remarquable en ce que le procédé comprend en outre, pour chaque utilisateur, une étape de construction d'une sous-base de données d'annotations comprenant uniquement les annotations sélectionnées en fonction du profil de l'utilisateur.

Ainsi, la base de données à transmettre à l'utilisateur (même si dans certains cas seules des références à des annotations sont transmises) a une taille qui est avantageusement réduite et permet des délais de transmission plus courts et des traitements plus rapides que si toute la base de données était transmise et le filtrage effectué par le terminal (même si cette dernière possibilité n'est pas exclue et fait partie intégrante de l'invention).

Selon une caractéristique particulière, le procédé de consultation est remarquable en ce que le profil de chaque utilisateur prend en compte au moins un des attributs suivants :
- au moins un profil de créateur d'annotations susceptible de fournir des données destinées à être utilisées pour construire une base d'annotations lors de l'étape de construction;
- au moins un domaine d'annotations ; et
- au moins un profil de fournisseur d'annotations.

Ainsi, un profil de créateur d'annotations ou de fournisseurs d'annotations peut contenir des informations d'identification et/ou de qualification (du créateur ou du fournisseur d'annotation concerné) sur un sujet particulier, des informations concernant les domaines traités ... L'utilisateur ou un intermédiaire (tel par exemple un fournisseur d'accès) peut ainsi avantageusement choisir ou sélectionner des créateurs d'annotations ou des fournisseurs d'annotations en fonction de certains critères et/ou les choisir parmi une liste.

Selon une caractéristique particulière, le procédé de consultation est remarquable en ce qu'il comprend en outre les étapes suivantes :
- mise en relation d'au moins un utilisateur et d'au moins un fournisseur d'annotations par un fournisseur de services d'annotation; et
- autorisation d'accès d'au moins un utilisateur à tout ou partie de la base de données d'annotations.

Ainsi, la présence d'un intermédiaire facilite avantageusement l'accès de l'utilisateur à un fournisseur d'annotations. En outre, l'accès peut être soumis à une autorisation ce qui peut permettre dans certains cas d'avoir des annotations qui pourraient être confidentielles. Cela offre aussi la possibilité d'abonnement, ce qui permet notamment la fourniture d'annotations qui ont une valeur commerciale.

Selon une caractéristique particulière, le procédé de consultation est remarquable en ce que le terminal met en oeuvre :
- la base de données d'annotations ; et/ou
- la sous-base de données d'annotations de l'utilisateur du terminal; et/ou
- au moins une étape parmi les suivantes:

- l'étape de recherche ;
- l'étape de liaison sémantique ;
- l'étape de proposition ; et
- l'étape de définition d'au moins un profil de l'utilisateur du terminal.

Ainsi, le terminal met avantageusement en oeuvre un certain nombre d'étapes qui traitées localement permettent notamment une exécution rapide de ces opérations et une proposition quasiment instantanée d'annotation.

Selon une caractéristique particulière, le procédé de consultation est remarquable en ce que les données consultées sont téléchargées via au moins un premier réseau de communication, et/ou disponibles sur un support de données.

Ainsi, la proposition d'annotations peut se faire de façon avantageuse quelle que soit l'origine des données consultées et notamment si ces données sont issues d'un réseau (tel, par exemple, un réseau de type Internet pris au sens large) ou sur un support de données (tel, par exemple, un CD-ROM ou DVD-ROM).

Selon une caractéristique particulière, le procédé de consultation est remarquable en ce qu'un équipement distant relié au terminal via au moins un second réseau de communication, identique à ou distinct du premier réseau de communication, met en oeuvre :
- la base de données d'annotations ; et/ou
- la sous-base de données d'annotations de l'utilisateur du terminal; et/ou
- au moins une étape parmi les suivantes:

- l'étape de recherche ;
- l'étape de liaison sémantique ;
- l'étape de proposition ; et
- l'étape de définition d'au moins un profil de l'utilisateur du terminal.

Ainsi, un équipement distant relié au terminal via un second réseau de communication met avantageusement en oeuvre un certain nombre d'étapes qui traitées à distance permettent notamment une mise à jour en temps réel ou régulière des annotations.

Selon une caractéristique particulière, le procédé de consultation est remarquable en ce que l'équipement distant appartient au groupe comprenant :
- des serveurs de fournisseurs d'annotations ;
- des serveurs de fournisseurs de services d'annotations ; et
- des équipements de cache (proxy) compris dans le second réseau de communication.

Ainsi, l'équipement distant est avantageusement un équipement privilégié facilement accessible par un utilisateur quelconque, et notamment par un client de fournisseur d'annotation et/ou de fournisseurs de services d'annotations (qui typiquement est un fournisseurs de services à distance et peut être notamment un fournisseur d'accès ou de service Internet).

Selon une caractéristique particulière, le procédé de consultation est remarquable en ce que le premier réseau de communication et/ou le second réseau de communication est (sont) un (des) réseau(x) de type Internet (Web, WAP ou dérivés).

Ainsi, les réseaux concernés par l'invention sont avantageusement des réseaux de type Internet pris au sens large, tel que le réseau Web, le réseau WAP et tous leurs dérivés, ces réseaux se prêtant bien, notamment à la fourniture de services et/ou d'informations à distance.

Selon une caractéristique particulière, le procédé de consultation est remarquable en ce qu'un fournisseur de service d'annotation met en oeuvre :
- la base de données d'annotations ;et/ou
- la sous-base de données d'annotations de l'utilisateur du terminal; et/ou
- au moins une étape parmi les suivantes:
   - l'étape d'association d'au moins une donnée de référence à au moins une annotation;
   - l'étape de recherche ;
   - l'étape de proposition ;
   - l'étape de liaison sémantique;
   - l'étape de définition d'au moins un profil de l'utilisateur du terminal;
   - l'étape de mise en relation; et
   - l'étape d'autorisation d'accès .

Ainsi, un fournisseur de service d'annotations met avantageusement en oeuvre un certain nombre d'étapes qui traitées à distance par le fournisseur de service d'annotations permettent notamment une mise à jour en temps réel ou régulière des annotations par le fournisseur de service lui-même, ce qui permet une transparence des traitements vis à vis de l'utilisateur du terminal.

L'invention concerne également un système de consultation de données sur au moins un terminal par au moins un utilisateur, les données consultées se présentant sous la forme de pages téléchargées depuis des sites distants, via au moins un premier réseau de communication, et/ou disponibles sur un support de données,
caractérisé en ce qu'il comprend des moyens de personnalisation des pages, mettant en oeuvre au moins une base de données d'annotations, indépendante des pages, les moyens de personnalisation comprenant eux-mêmes les moyens suivants:
- moyens d'association dans la base de données d'au moins une donnée de référence susceptible d'être détectée parmi les données consultées, à au moins une annotation ;
- moyens de recherche d'au moins une donnée de référence dans les pages, ou dans au moins une portion des pages ; et
- moyens de proposition systématique, lorsqu'une des données de référence est détectée par les moyens de recherche parmi les données consultées, de la au moins une annotation associée dans la base de données à la donnée de référence détectée.

Selon une caractéristique particulière, le système de consultation de données remarquable en ce qu'un fournisseur de service d'annotation met en oeuvre au moins certains des moyens d'association, de recherche et/ou de proposition, de façon à fournir un service d'annotations à l'(aux) utilisateur(s) disposant du (des) terminal (terminaux).

Selon une caractéristique particulière, le système de consultation de données remarquable en ce que le fournisseur de service d'annotation comprend des moyens de fourniture à l'utilisateur via un second réseau de communication, identique à ou distinct du premier réseau, et/ou via un support de données, d'au moins certains des moyens suivants :
- tout ou partie de la base de données d'annotations ;
- au moins un des moyens de recherche ; et
- au moins un des moyens de proposition.

Les caractéristiques particulières et les avantages du système de consultation de données étant les mêmes que ceux du procédé de consultation de données, ils ne sont pas rappelés ici.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 illustre schématiquement un réseau, conforme à l'invention, selon un mode particulier de réalisation;
- la figure 2 décrit un écran de consultation de données, conforme à l'invention selon un mode particulier de réalisation ;
- la figure 3 présente un écran de consultations de données avec présentation d'une annotation, conforme à l'invention, selon un mode particulier de réalisation ;
- la figure 4 illustre schématiquement la consultation d'un site d'opérateur proposant un service d'annotations, conforme à l'invention, selon un mode particulier de réalisation ;
- la figure 5 présente un protocole de communication permettant la mise à jour d'une base de données d'annotations, conforme à l'invention, selon un mode particulier de réalisation ;
- la figure 6 présente un protocole de communication permettant la mise en oeuvre de proposition d'annotation à un client, conforme à l'invention, selon un mode particulier de réalisation ;
- la figure 7 illustre schématiquement un réseau, selon une première variante conforme à l'invention, selon un mode particulier de réalisation; et
- la figure 8 présente un protocole de communication permettant la mise en oeuvre de proposition d'annotation à un client, selon la première variante conforme à l'invention, selon un mode particulier de réalisation.

Le principe général de l'invention repose sur la personnalisation de données se présentant sous forme de pages, ces données étant affichées et/ou enregistrées sur un terminal de client. Ces données sont :
- téléchargées depuis des sites distants via par exemple un réseau Internet ; et/ou
- disponibles sur un support de données tel un CD-ROM, un DVD-ROM ou une disquette.

Dans un premier temps, un fournisseur d'annotations construit une base de données comprenant des annotations. Des données de référence telles que par exemple des critères de liaison sémantique constitués de mots de référence sont associées à chacune des annotations figurant dans la base.

En variante ; la base de données ne comprend pas les annotations elles-mêmes mais des références à des annotations qui pourront ainsi être téléchargées en cas de besoin.

On peut aussi associer aux annotations de la base, des paramètres caractérisant chacune des annotations, tels que son domaine d'application (par exemple sport, économie, voyage...), un thème précis ( par exemple jeux olympiques, équipe de football,...), son type (texte, image, document sonore, extrait de journal, lien hypertexte,..), une date de création ou de mise à jour, l'auteur à son origine et éventuellement le profil de cet auteur (par exemple expert du domaine, journaliste, quidam, membre d'une entreprise ou d'une organisation donnée, ...).

Dans un deuxième temps, un client peut s'abonner à un service d'annotations auprès notamment d'un fournisseur d'annotations via notamment un fournisseur de service d'annotations. Le fournisseur de service d'annotations peut être un opérateur de télécommunication ou un fournisseur d'accès Internet. Au cours de l'opération d'abonnement, le client peut définir son profil en précisant ce qui l'intéresse (notamment domaine, thème précis, profil de créateur d'annotation,..).

En variante, le client s'abonne directement auprès du fournisseur de service d'annotations. Son profil peut alors contenir en outre, un profil de fournisseur d'annotations.

D'une manière générale, le client a la possibilité de mettre à jour son profil quand il le désire ou suivant un évènement quelconque.

Ensuite, une base de données d'annotations extraite d'une base d'annotations complète mais ne contenant que les annotations filtrées selon le profil du client, est téléchargée du fournisseur d'annotations vers un terminal du client ainsi qu'un outil logiciel.

Lorsque le terminal du client affiche à des données, l'outil logiciel recherche dans les données affichées, des données de références figurant dans la base de données d'annotations téléchargée.

Lorsqu'une donnée de référence est détectée, l'outil logiciel :
- propose au client l'affichage de la ou des annotations associées, dans la base de données d'annotations, à la donnée de référence détectée (le client est alors libre d'accepter ou de refuser l'affichage d'une annotation); et/ou
- affiche la ou les annotations associées dans la base de données d'annotations, à la donnée de référence détectée.

En variante, lorsque les données consultées transitent par un réseau, un « proxy » effectue les opérations de recherche de données de référence dans les données consultées en prenant en compte une base de données d'annotations téléchargée à partir d'un fournisseur d'annotations auquel le client est abonné et le profil du client. Lorsque le proxy détecte une donnée de référence compatible avec le profil du client, il insère dans les données consultées :
- une proposition d'annotation associée à la donnée de référence détectée ; et/ou
- une annotation associée à la donnée de référence détectée.

En variante, la base de données d'annotations n'est pas constituée d'annotations au sens strict mais de références à des annotations. Ainsi, lorsqu'il est nécessaire d'afficher une annotation, cette annotation est téléchargée, depuis, la référence mentionnée dans la base de données d'annotations ; cette référence est par exemple, une adresse référant à cette annotation ou un index dans une table d'annotations.

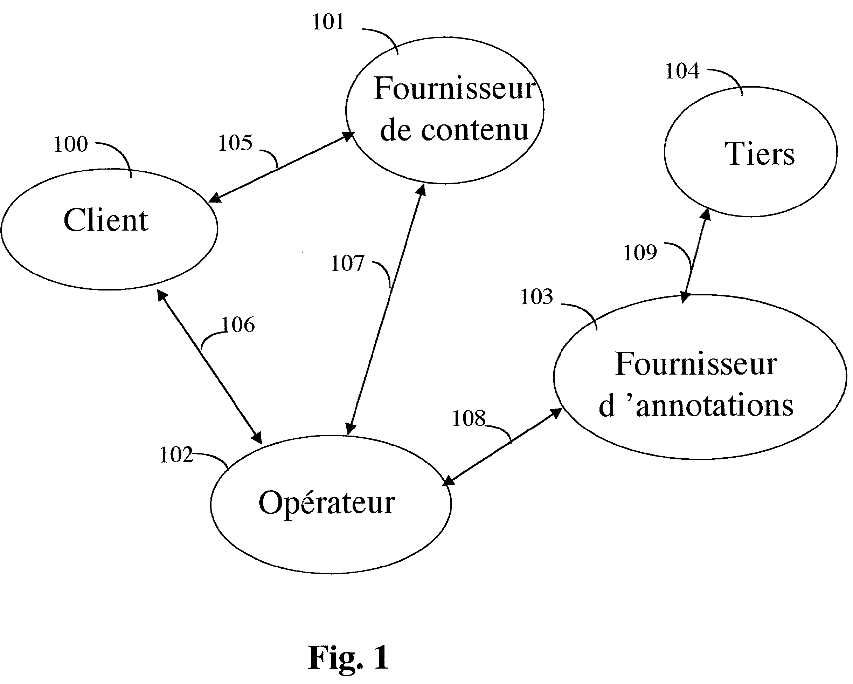

On présente, en relation avec la figure 1, une infrastructure de réseau de télécommunication permettant la mise en oeuvre de l'invention.

Cette infrastructure comprend notamment :
- un terminal client 100 ;
- un site 101 Internet de fournisseur de contenu ;
- un équipement 102 d'opérateur ;
- un équipement 103 de fournisseur d'annotations ;
- un terminal 104 d'un tiers.

Le terminal client 100 et le terminal 104 d'un tiers sont des terminaux d'un type quelconque tel que par exemple, ordinateur et/ou terminal mobile.

Le terminal client 100 peut accéder via une liaison 105 quelconque à un site 101 Internet de fournisseur de contenu. Ainsi, le terminal client 100 peut notamment consulter des données issues du site 101.

Le terminal client 100 est aussi relié via une liaison 106 à un équipement 102 d'opérateur qui lui permet notamment de télécharger des données ou des outils de traitement de données et de visualisation.

L'équipement 102 d'opérateur est relié au site 101 via une liaison 107 qui lui permet éventuellement de télécharger de données.

L'équipement 102 d'opérateur est par ailleurs relié à l'équipement 103 de fournisseur d'annotations via une liaison 108 qui lui permet de télécharger des données et des outils de traitement de données et de visualisation.

L'équipement 103 de fournisseur d'annotations est relié à un terminal 104 de tiers via une liaison 109 qui permet au terminal 104 de tiers de fournir à l'équipement 103 des données.

Les liaisons 105, 102, 107, 108 et 109 sont des liaisons de communications quelconques notamment des liaisons faisant partie d'un réseau téléphonique commuté (RTC), des liaisons de type Internet et/ou des liaisons appartenant à un réseau de radiocommunications (par exemple selon la norme GSM, ou autre).

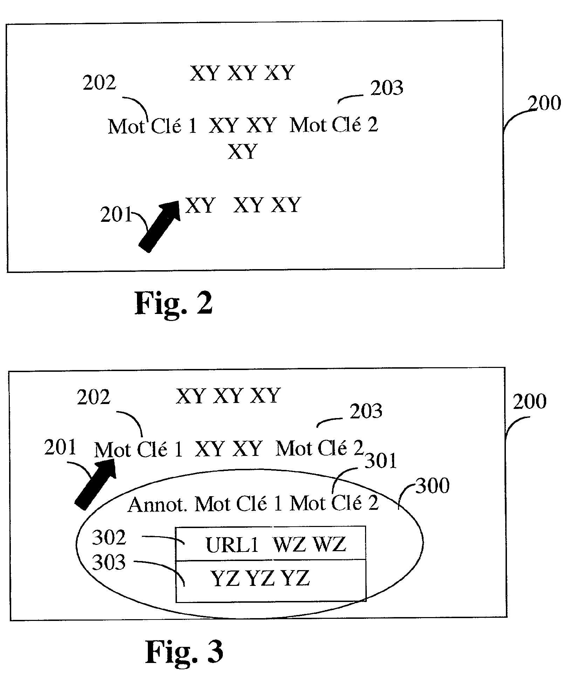

La figure 2 illustre schématiquement un écran 200 de terminal tel le terminal client 100 tel qu'il apparaît lors de la consultation d'un site 101.

Sur cet écran 200, on visualise du texte contenant des données issues du site 101 et un pointeur 201 (contrôlé par exemple par une souris d'ordinateur).

Le texte comprend notamment un premier mot clé 202 et à proximité un deuxième mot clé 203.

On suppose dans cette figure 2 que le pointeur 201 est relativement éloigné des mots clés 201 et 202.

Le pointeur 201 étant relativement éloigné des mots clés 201 et 202, les seules données qui apparaissent à l'écran sont celles issues du site 101. (On note que l'écran apparaît de manière identique lorsque la consultation des données du site 201 est effectuée sans mise en oeuvre de l'invention).

La figure 3 illustre schématiquement un écran 200 similaire à celui décrit en regard de la figure 2.

Dans cette figure 3, le pointeur 201 est proche des mots clés 202 et 203.

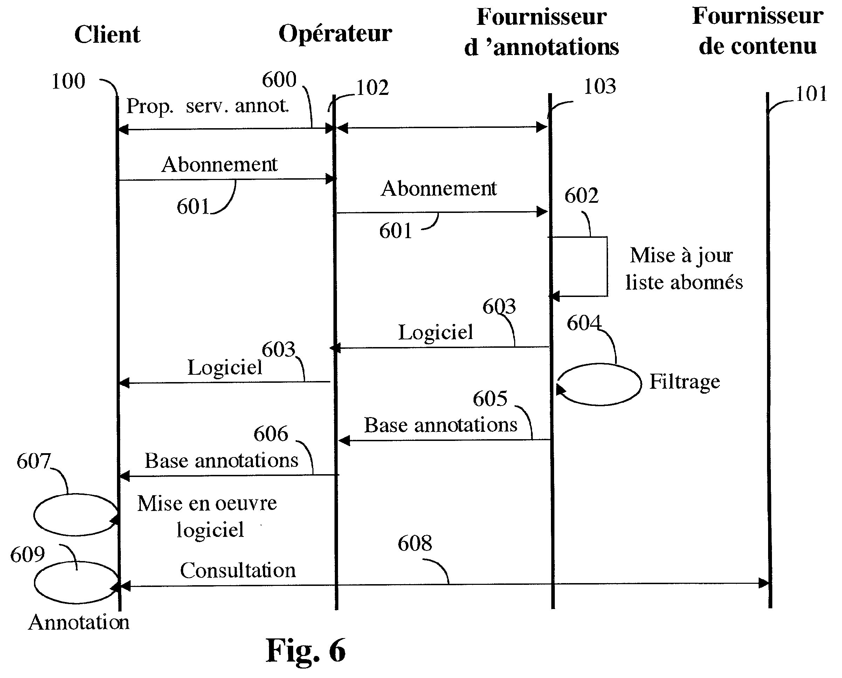

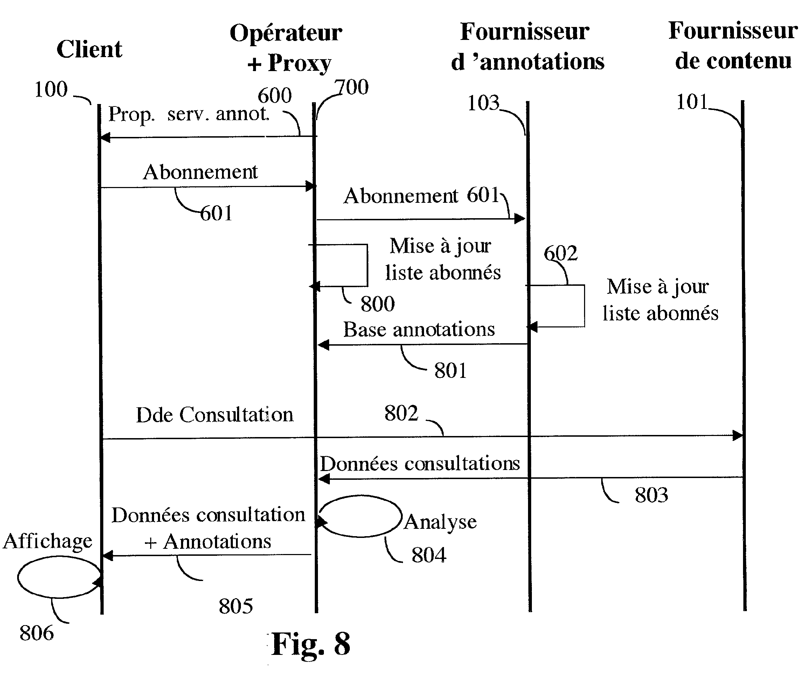

En conséquence, une annotation 300 est affichée sur l'écran 200 lors d'une opération de proposition d'annotation décrite en regard des figures 6 ou 8.

L'annotation 300 comprend notamment :
- un titre 301 indiquant clairement qu'il s'agit d'une annotation relative aux mots clés 202 et 203 présents sur l'écran et à proximité du pointeur 201 ;
- une adresse 302 de site Internet pertinente au regard des mots clés 202 et 203 ;
- des données 303 pertinentes au regard des mots clés 202 et 203 ;

On note que les données 303 sont d'un type quelconque et sont, par exemple, des données de type texte, image, données multimédia.

L'adresse 302 permet un hyperlien vers un site quelconque Internet par exemple de type web ou WAP (Wireless Application Protocole).

L'annotation 300 est issue d'une base de données d'annotations présente dans l'équipement 103 de fournisseur d'annotations et a été transférée au terminal client 100 via l'équipement 102 d'opérateur.

En première variante, le positionnement du pointeur 201 relativement aux positions des mots clés 202 et 203 n'est pas pris en compte et l'annotation 300 est affichée dès que les mots clés 202 et 203 apparaissent à l'écran, ou à proximité l'un de l'autre ou encore dans une même zone de l'écran.

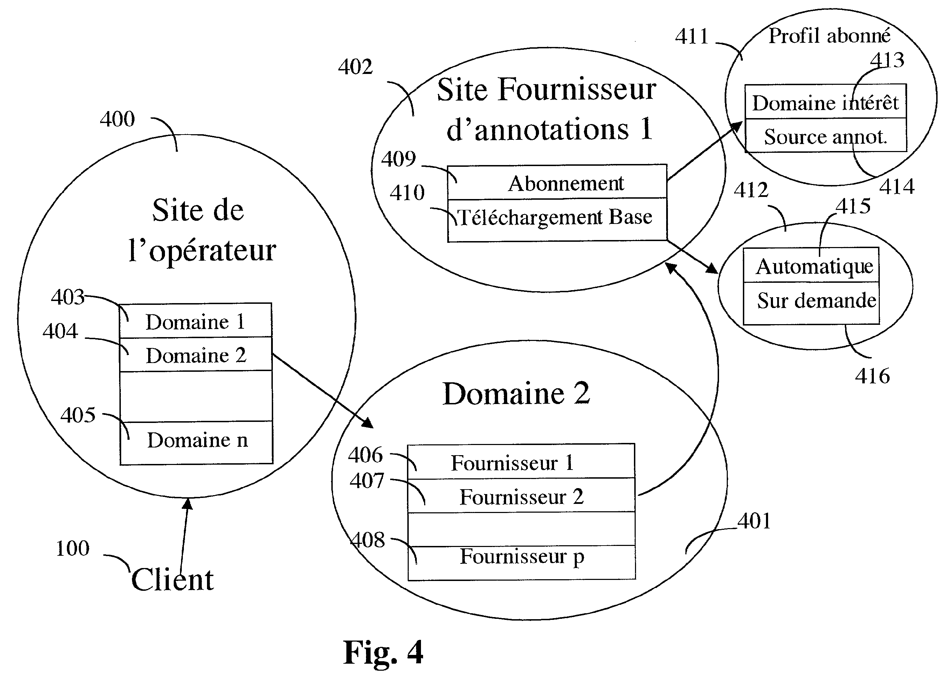

La figure 4 illustre schématiquement la consultation par le terminal client 100 d'un site 400 d'opérateur mise en oeuvre par l'équipement 102 et proposant un service d'annotations.

Ce site 400 d'opérateur est un site de type Internet et permet des hyperliens vers d'autres sites, fichiers ou données.

Lorsque le terminal client 100 consulte via la liaison 106 le site 400, l'équipement 102 d'opérateur propose au client plusieurs domaines 403, 404 et 405 d'intérêts que le client peut sélectionner. L'opérateur en charge du site 400 peut proposer par exemple des domaines de type «voyages », « économie », « sport », « cinéma »... Chacun des domaines proposés est relié par hyperlien à une page correspondante.

Ainsi, si le client sélectionne le domaine 404, une page 401 liée au domaine 404 va lui être proposée.

Cette page 401 contient des propositions 406, 407 et 408 de fournisseurs d'annotations en relations avec le domaine 404 précédemment sélectionné.

Si par exemple, le domaine sélectionné est celui du sport, les fournisseurs d'annotations correspondants pourront être par exemple des journaux sportifs.

Chacune des propositions 406 à 408 est reliée par hyperlien à une page 402 présente sur un site fourni par un équipement 103 de fournisseur d'annotations correspondant.

Cette page 402 comprend notamment :
- une proposition 409 d'abonnement à un service d'annotation ou d'enregistrement auprès d'un service d'annotation;
- une proposition 410 de téléchargement d'une base de données d'annotations.

On note que la base de données d'annotations qui est téléchargée comprend les annotations elles-mêmes et/ou des références à ces annotations.

Si le client sélectionne la proposition 409 d'abonnement, l'équipement 103 lui fournit une page 411 de définition d'un profil d'abonné, ce profil comprenant notamment :
- une définition du ou des domaines d'intérêt d'abonné ;
- une définition des sources d'annotations désirées par l'abonné.

Dans la page 411, une proposition 413 permet de définir ou compléter le profil d'abonné indiquant quels sont les centres d'intérêts précis du client qui permettront un filtrage des annotations qui lui seront fournies. Par défaut, si le client ne définit pas de centre d'intérêts précis, aucun filtrage sur les annotations ne sera effectué par l'équipement 103 du fournisseur d'annotations. Dans le domaine du fournisseur d'annotations de type sport, ces centres d'intérêts précis pourront être très variés et être, par exemple, un sport particulier tel que le football, un type de compétition tel que les jeux olympiques, des sportifs célèbres, des méthodes d'entraînement, des fournisseurs d'équipement...

Dans la page 411, une proposition 414 permet de définir ou compléter le profil abonné par un filtre sur les sources d'annotations, tel un tiers 104. Le client peut en effet ne s'intéresser qu'aux informations issues de personnes nommément définies, de personnes appartenant ou au contraire n'appartenant pas à une classe précise, telle que la classe des journalistes ou des sportifs célèbres... Par défaut, si le client ne définit pas de source d'annotations précise, aucun filtrage sur les sources d'annotations ne sera effectué par l'équipement 103 du fournisseur d'annotations.

La première fois qu'il utilise le service d'un fournisseur d'annotations, le client télécharge une base de donnée d'annotations. Le client peut donc sélectionner la proposition 410 de téléchargement de base ce qui entraîne l'affichage d'un menu 412 comprenant notamment une proposition 415 de téléchargement automatique et une proposition 416 de téléchargement sur demande. Ainsi, une base de données d'annotations ( base de données contenant les annotations elles-mêmes ou des références aux annotations) pourra être téléchargée une première fois via la liaison 108 puis ensuite être mise à jour automatiquement après validation de la proposition 415 ou sur demande après validation de la proposition 416.

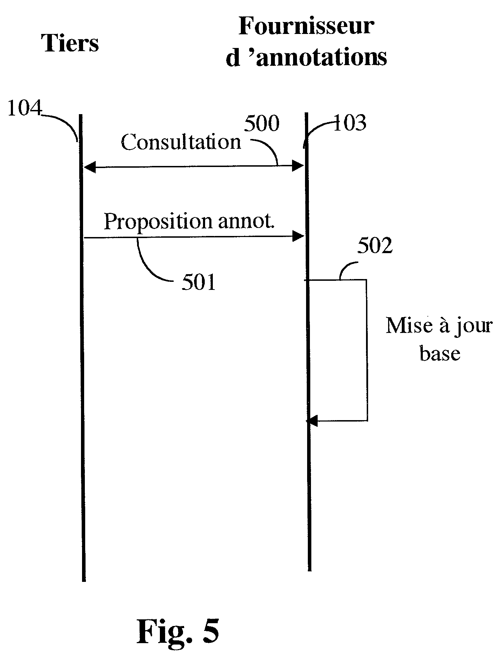

La figure 5 présente un protocole de communication permettant la mise à jour d'une base de données d'annotations dans un équipement 103 d'un fournisseur d'annotations par un terminal 104 d'un tiers.

Lors de la consultation 500 par un tiers, du site 402 du fournisseur d'annotations, on offre la possibilité au terminal 104 de tiers de fournir une donnée pouvant servir de base à une annotation.

Ainsi, l'équipement 104 d'un tiers appelé ici créateur d'annotations effectue une proposition 501 d'annotation à l'équipement 103 du fournisseur d'annotations.

Si les données fournies par le terminal 104 sont intéressantes pour le fournisseur d'annotations, l'équipement 103 de fournisseur d'annotations effectue alors, lors d'une opération 502 de mise à jour, une mise en forme pour obtenir une annotation qu'il stocke dans une base de données d'annotations avec des informations pertinentes telles que le type du créateur d'annotations correspondant, le domaine, le sujet précis de l'annotation, ce qui permettra par la suite un filtrage suivant ces critères.

En variante, les opérations 500 de consultation et 501 de proposition sont remplacées par une opération de collecte durant laquelle les données servant à la création des annotations sont collectées directement auprès d'un créateur d'annotations à l'initiative du fournisseur d'annotations.

La figure 6 présente un protocole de communication permettant la mise en oeuvre de proposition d'annotation au terminal client 100, tel qu'illustré en regard de la figure 1.

Au cours d'une opération 600, l'équipement 102 d'opérateur par l'intermédiaire du site 400 illustré en regard de la figure 4 et l'équipement 103 de fournisseur d'annotations par l'intermédiaire du site 402 proposent au terminal client 100, un service d'annotation.

Au cours d'une opération 601, le terminal client 100 s'abonne à un service d'annotations auprès de l'équipement 103 du fournisseur d'annotations via l'équipement 102 d'opérateur, en définissant le cas échéant son profil (par sélection de la proposition 413 et/ou 414). Le service d'annotations peut être gratuit ou payant. S'il est payant, une opération de paiement suivant un mode quelconque est effectuée.

Ensuite, au cours d'une opération 602, l'équipement 103 de fournisseur d'annotations met à jour sa base de données contenant une liste d'abonnés.

Puis, au cours d'une opération 603, un logiciel d'annotation est téléchargé de l'équipement 103 de fournisseur d'annotations vers le terminal client 100 via l'équipement 102 d'opérateur. Le logiciel d'annotations est adapté à une mise en oeuvre sur le terminal 100 et permet la proposition dynamique d'annotations par scrutation permanente ou temporaire des données qui sont affichées sur l'écran de l'utilisateur.

En variante, le logiciel d'annotation est fourni directement par l'équipement 102 au terminal client 100. On note que cette opération est nécessaire uniquement si le terminal client 100 ne possède pas déjà le logiciel d'annotation. L'opérateur sait si le terminal client est déjà abonné à un service quelconque d'annotations géré par lui-même. Si tel est le cas, le terminal client 100 possède déjà le logiciel d'annotation et l'opération 603 est facultative. Selon cette variante, on utilise le procédé tel que décrit dans la demande de brevet ayant pour titre « Procédé d'optimisation, par un élément d'architecture de réseau, de la consultation de données » déposé le même jour que la présente demande par le même déposant. Le texte de cette autre demande est inséré ici par référence. On note cependant, que selon ce procédé, un élément de l'infrastructure du réseau insère à la volée un code actif au sein de données consultées, transitant par cet élément. Le code actif est un code qui permet l'exécution d'un algorithme et/ou d'instructions par le terminal de l'utilisateur. Le code actif peut-être notamment :
- un code script interprété par un navigateur présent sur le terminal;
- un « include » de code script interprété par un navigateur ;
- un objet navigateur ;
- une invocation d'objet navigateur ;
- un applets;
- une invocation d'applet ; ou
- une ou plusieurs macros instructions.

Ensuite, au cours d'une opération 604, l'équipement 103 de fournisseur d'annotations crée une base de données d'annotations filtrées extraite d'une base de données d'annotations complète ne comprenant que :
- les annotations correspondantes au profil du terminal client 100 défini lors de son abonnement au service d'annotation ; et
- les mots clés associés.

Ensuite, au cours d'une opération 605, la base de données d'annotations filtrées est téléchargée de l'équipement 103 de fournisseur d'annotations vers l'équipement 102 d'opérateur.

Puis au cours d'une opération 606, la base de données d'annotations filtrées est téléchargée de l'équipement 102 d'opérateur vers le terminal client 100.

Puis, au cours d'une opération 607, le logiciel d'annotation est mis en oeuvre en association avec la base de données d'annotations filtrées, téléchargée au sein du terminal client 100.

Ensuite, au cours d'une opération 608 de consultation d'un site 101 de fournisseur de contenu par le terminal client 100, le logiciel d'annotation scrute la présence de données qui par critère sémantique peuvent être associées à des mots clés de la base téléchargée, de données d'annotations filtrées.

Lorsque le logiciel d'annotation détecte la présence de données qui par critère sémantique peuvent être associées à des mots clés de la base de données d'annotations filtrées, il affiche lors d'une opération 609 sur l'écran du terminal 100 du client l'annotation correspondante extraite de la base de données d'annotations filtrées.

En variante de l'opération 609, le logiciel d'annotation demande d'abord à l'utilisateur du terminal client 100, s'il désire l'affichage ou non d'une annotation. Dans l'affirmative, l'annotation correspondante est affichée. Dans la négative, l'annotation correspondante n'est pas affichée.

En première variante du protocole, l'opération de filtrage n'est pas effectuée par l'équipement 103 du fournisseur d'annotations, mais par l'équipement 102 d'opérateur qui doit avoir alors connaissance du profil de l'utilisateur, ce profil ayant été alors obtenu par l'intermédiaire de l'équipement 103 du fournisseur d'annotations ou directement par le terminal client 100. Selon cette variante, l'équipement 103 de fournisseur d'annotations transmet une base de données d'annotations complète à l'équipement 102 d'opérateur lors de l'opération 605 avant que celui n'effectue l'opération de filtrage et de construction d'une base de données filtrées puis l'opération 606 de transmission de la base de données filtrées ainsi construite au terminal client 100.

En seconde variante, les équipements 102 et 103 transmettent une base de données d'annotations complète lors des opérations 605 et 606 et l'opération de filtrage est effectuée par le logiciel d'annotation au sein du terminal client 100 à la volée (ce qui n'implique pas la construction d'une base de données d'annotations filtrées) ou lors de la réception de la base de données d'annotations complète (ce qui suppose la construction d'une base de données d'annotations filtrées). On note que selon cette seconde variante, le profil de l'utilisateur peut être défini localement au sein du terminal 100.

Selon une variante, lorsque la base de données d'annotations complète ou filtrée ne contient que des références à des annotations et lorsque le logiciel d'annotation détecte la présence de données qui par critère sémantique peuvent être associées à des mots clés de la base de données de référence d'annotations (complète ou filtrée), le terminal client 100 effectue une requête d'annotation auprès de l'équipement 103 de fournisseur d'annotations contenant une référence à l'annotation correspondante extraite de la base de données d'annotations (cette référence pouvant notamment être de type adresse URL ou un index dans une table d'annotations). Puis, l'équipement 103 de fournisseur d'annotations envoie l'annotation référencée vers le terminal client 100 qui affiche alors l'annotation reçue.

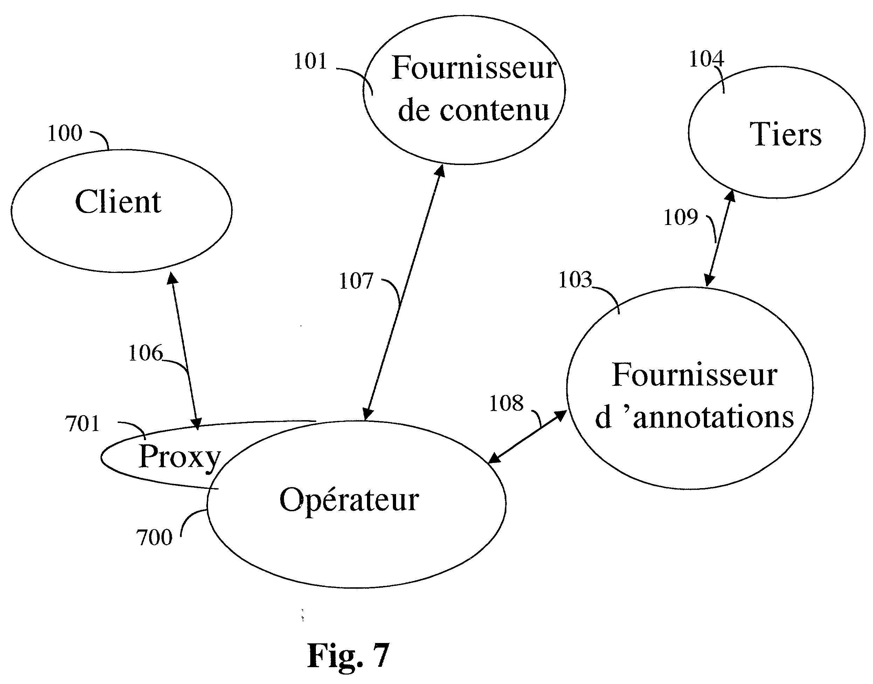

On présente, en relation avec la figure 7, une variante de l'infrastructure de réseau de télécommunication telle que décrite en regard de la figure 1.

Les éléments communs aux figures 1 et 7 portent les mêmes références et ne seront pas décrits ici d'avantage.

On note cependant que cette infrastructure comprend notamment :
- un terminal client 100 ;
- un site 101 Internet de fournisseur de contenu ;
- un équipement 700 d'opérateur ;
- un équipement 103 de fournisseur d'annotations ;
- un terminal 104 d'un tiers.

On note, en outre, que les liaisons :
- 109 entre le terminal 104 et l'équipement 103 ;
- 108 entre l'équipement 103 et l'équipement 700 d'opérateur ;
- 107 entre le site 101 et l'équipement 700 d'opérateur ; et
- 106 entre le terminal 100 et l'équipement 700 ;
sont conservées.

Par contre, la liaison directe entre le terminal client 100 et le site 101 n'est plus nécessaire.

Le terminal opérateur 700 comprend notamment un proxy 701 ou passerelle.

Dans le mode de réalisation de l'invention basée sur la variante d'infrastructure décrite en regard de la figure 7, les données issues du site 101 transitent par la liaison 107, l'équipement 700 d'opérateur et son proxy 701, et la liaison 106 avant d'être traitées ou affichées par le terminal client 100.

Dans ce mode de réalisation, les annotations apparaissent sur le terminal client 100 de la même manière selon les deux types d'infrastructure décrites en regard des figures 1 et 7. Néanmoins, la mise à disposition des annotations se fait suivant deux protocoles différents.

La figure 8 présente un protocole de communication permettant la mise en oeuvre de proposition d'annotation au terminal client 100, tel qu'illustré en regard de la figure 7.

Au cours d'une opération 600, l'équipement 102 d'opérateur par l'intermédiaire du site 400 illustré en regard de la figure 4 et l'équipement 103 de fournisseur d'annotations par l'intermédiaire du site 402 proposent au terminal client 100, un service d'annotation.

Au cours d'une opération 601, le terminal client 100 s'abonne à un service d'annotation auprès de l'équipement 103 du fournisseur d'annotations via l'équipement 700 d'opérateur, en définissant le cas échéant son profil (par sélection de la proposition 413 et /ou 414). Le service d'annotation peut être gratuit ou payant. S'il est payant, une opération de paiement suivant un mode quelconque est effectuée.

Puis au cours d'une opération 800, le proxy 701 de l'équipement 700 d'opérateur met à jour une première liste d'abonnés.

Ensuite, au cours d'une opération 602, l'équipement 103 de fournisseur met à jour sa base de données contenant une deuxième liste d'abonnés.

Ensuite, au cours d'une opération 801, la base de données d'annotations complète est téléchargée de l'équipement 103 de fournisseur d'annotations vers le proxy 701. On note que le proxy 701 peut être connecté à plusieurs terminaux de clients qui n'ont pas nécessairement le même profil. Dans ce cas, le proxy 701 a besoin selon un mode préféré de réalisation d'une base de données d'annotations qui englobe toutes données susceptibles d'être utiles aux clients selon leur profil, voire complète.

En variante, le proxy 701 n'utilise qu'une base de données d'annotations filtrées par l'équipement 103 du fournisseur d'annotations. Dans ce cas, l'équipement 103 du fournisseur d'annotations connaît les profils des terminaux clients connectés au proxy grâce aux abonnements souscrits au préalable lors de l'opération 601 ou par une requête émise au préalable par le proxy 701, spécifiant le filtre qui doit être appliquer sur la base de données d'annotations complète de l'équipement 103 du fournisseur d'annotations pour obtenir une base de données d'annotations filtrées qui sera transmise au proxy 701. Selon cette variante, une base de données d'annotations filtrées est transmise par l'équipement 103 du fournisseur d'annotations.

Après avoir effectué l'opération 801 (selon le mode préféré de réalisation ou la variante décrite précédemment), au cours d'une opération 802, le terminal client 100, effectue une consultation d'un site 101 de fournisseur de contenu Internet via les liaisons 106 et 107 décrites en regard de la figure 7.

Puis, au cours d'une opération 803, des données consultées sont transmises par le site 101 de fournisseur de contenu au proxy 701 via la liaison 107 décrite en regard de la figure 7.

Ensuite, au cours d'une opération 804 d'analyse, les données consultées transitent par le proxy 701 qui détecte la présence de données qui par critère sémantique peuvent être associées à des mots clés de la base de données d'annotations filtrées. Lorsque la présence de telles données est détectée, le proxy 701 modifie les données consultées avant de les relayer vers le terminal client 100. Ainsi, le proxy ajoute des annotations correspondant aux données détectées. Il peut aussi, selon le type d'application, retirer des données consultées, ou encore en modifier la présentation. Il peut aussi insérer à la volée, un code actif, c'est-à-dire un code qui permet l'exécution d'un algorithme et/ou d'instructions par le terminal de l'utilisateur. Ce code actif peut-être notamment un code script, un applet, un ensemble de macro-instructions. On pourra notamment utiliser le procédé tel que décrit dans la demande de brevet ayant pour titre « Procédé d'optimisation, par un élément d'architecture de réseau, de la consultation de données» déposé le même jour que la présente demande par le même déposant. Le texte de cette autre demande est inséré ici par référence.

Ensuite, au cours d'une opération 805, les données mises à jour par le proxy 701 et comprenant les données consultées issues du site 101 et une ou plusieurs éventuelles annotations sont transmises au terminal client 100 via la liaison 106 décrite en regard de la figure 7.

Puis, au cours d'une opération 806 d'affichage, les données mises à jour par le proxy 701 sont affichées sur l'écran du terminal client 100.

Selon une variante, lorsque la base de données d'annotations téléchargée de l'équipement 103 de fournisseur d'annotations vers le proxy 701 au cours de l'opération 801, ne contient pas les annotations elles-mêmes mais des références aux annotations , et lorsque au cours de l'opération 804 d'analyse, le proxy 701 détecte la présence de données qui par critère sémantique peuvent être associées à des mots clés de la base de données de référence d'annotations (complète ou filtrée), le proxy 701 effectue une requête d'annotation auprès de l'équipement 103 de fournisseur d'annotations contenant une référence à l'annotation correspondante extraite de la base de données d'annotations téléchargée (cette référence pouvant notamment être de type adresse URL ou un index dans une table d'annotations). Puis, l'équipement 103 de fournisseur d'annotations envoie l'annotation référencée vers le proxy 701 qui insère alors l'annotation reçue dans les données consultées avant de les transmettre au terminal 100 au cours de l'opération 805.

Les modes de réalisation décrits n'ont pas pour objectif de réduire la portée de l'invention. En conséquence, il pourra y être apporté de nombreuses modifications sans sortir du cadre de celle-ci ; notamment, on peut envisager que les données consultées puissent provenir non seulement d'un site Internet, mais aussi d'un médium quelconque tel que notamment un CD-ROM, un DVD-ROM, une disquette informatique.

De même, les bases de données d'annotations ainsi que les logiciels d'analyse des données consultées et de proposition d'annotations ne sont pas nécessairement téléchargées via un réseau de télécommunications, mais peuvent être lues sur et/ou téléchargés à partir d'un médium quelconque tel que notamment un CD-ROM, un DVD-ROM, une disquette informatique.

En outre, on pourra apporter toute variante dans l'infrastructure des réseaux décrits à la portée de l'homme du métier. Certains éléments des réseaux décrits pourront par exemple être combinés. On peut notamment combiner l'équipement de fournisseur d'annotations et d'opérateur. Le fournisseur d'annotations pourra aussi créer directement des annotations sans faire appel à un créateur d'annotation.

## Revendications

1. Procédé de consultation de données sur au moins un terminal (100) par au moins un utilisateur, les données consultées se présentant sous la forme de pages (200) téléchargées depuis des sites distants (101) et/ou disponibles sur un support de données , **caractérisé en ce qu'**il comprend une étape de personnalisation desdites pages, mettant en oeuvre au moins une base de données d'annotations, indépendante desdites pages (200), ladite étape de personnalisation comprenant elle-même les étapes suivantes:
- association dans ladite base de données d'annotations d'au moins une donnée de référence susceptible d'être détectée parmi lesdites données consultées, à au moins une annotation ;
- recherche d'au moins une donnée de référence (202, 203) dans lesdites pages (200), ou dans au moins une portion desdites pages ; et
- proposition systématique, lorsqu'une desdites données de référence est détectée lors de ladite étape de recherche parmi lesdites données consultées, de la au moins une annotation associée (300) dans ladite base de données d'annotations à ladite donnée de référence détectée (202, 203).

2. Procédé de consultation selon la revendication 1 **caractérisé en ce que** l'étape d'association d'au moins une donnée de référence à au moins une annotation comprend une étape d'association d'au moins un critère de liaison sémantique constitué d'au moins un mot de référence, à chaque annotation de ladite base de données d'annotations ;
et **en ce que** l'étape de recherche comprend une recherche (608, 804) d'au moins une liaison sémantique dudit au moins un critère de liaison sémantique, à ladite au moins une donnée de référence susceptible d'être détectée parmi lesdites données consultées (200).

3. Procédé de consultation selon l'une quelconque des revendications 1 et 2 **caractérisé en ce que** l'étape d'association d'au moins une donnée de référence à au moins une annotation comprend une étape de construction (502) de ladite base de données d'annotation à partir de données (501) fournies par au moins un créateur d'annotations (104).

4. Procédé de consultation selon l'une quelconque des revendications 1 à 3 **caractérisé en ce que** ladite étape de proposition comprend au moins une des étapes suivantes :
- indication de la possibilité de fournir une annotation associée à ladite au moins une donnée de référence détectée lors de ladite étape de recherche ;
- fourniture (609, 805, 806) proprement dite d'une annotation associée à ladite au moins une donnée de référence détectée lors de ladite étape de recherche, sur requête dudit au moins un utilisateur.

5. Procédé de consultation selon l'une quelconque des revendications 1 à 4, **caractérisé en ce que** ledit procédé comprend en outre, pour chaque utilisateur, les étapes suivantes :
- définition d'un profil (601) dudit utilisateur permettant de limiter les annotations mises à la disposition dudit utilisateur (100), à des annotations sélectionnées faisant partie d'un groupe spécifique de sélection comprenant des annotations susceptibles d'intéresser ledit utilisateur (100) ; et
- sélection des annotations en fonction dudit profil dudit utilisateur, de sorte que seules lesdites annotations sélectionnées sont proposées audit utilisateur lors de ladite étape de proposition (609, 806).

6. Procédé de consultation selon la revendication 5, **caractérisé en ce que** ledit procédé comprend en outre, pour chaque utilisateur, une étape (604) de construction d'une sous-base de données d'annotations dudit utilisateur comprenant uniquement lesdites annotations sélectionnées en fonction dudit profil dudit utilisateur (100).

7. Procédé de consultation selon l'une quelconque des revendications 5 et 6, **caractérisé en ce que** ledit profil dudit utilisateur prend en compte au moins un des attributs suivants :
- au moins un profil de créateur d'annotations susceptible de fournir des données destinées à être utilisées pour construire une base d'annotations lors de ladite étape de construction (502) selon la revendication 3;
- au moins un domaine d'annotations ; et
- au moins un profil de fournisseur d'annotations (103).

8. Procédé de consultation selon l'une quelconque des revendications 1 à 7 **caractérisé en ce qu'**il comprend en outre les étapes suivantes :
- mise en relation d'au moins un utilisateur (100) et d'au moins un fournisseur d'annotations (103)par un fournisseur de services d'annotation; et
- autorisation d'accès d'au moins un utilisateur (100) à tout ou partie de ladite base de données d'annotations.

9. Procédé de consultation selon l'une quelconque des revendications 1 à 8 **caractérisé en ce que** ledit terminal met en oeuvre :
- ladite base de données d'annotations ; et/ou
- ladite sous-base de données d'annotations dudit utilisateur dudit terminal (100) selon la revendication 6 ; et/ou
- au moins une étape parmi les suivantes:
- ladite étape de recherche (607, 608);
- ladite étape de liaison sémantique (607, 608) selon la revendication 2;
- ladite étape de proposition (609); et
- ladite étape de définition (601) d'au moins un profil dudit utilisateur dudit terminal selon la revendication 5;

10. Procédé de consultation selon l'une quelconque des revendications 1 à 9, **caractérisé en ce que** lesdites données (200) consultées sont téléchargées via au moins un premier réseau de communication (105, 106, 107, 102, 01), et/ou disponibles sur un support de données.

11. Procédé de consultation selon l'une quelconque des revendications 1 à 10, **caractérisé en ce qu'**un équipement (102, 103, 700) distant relié audit terminal (100) via au moins un second réseau de communication, identique à ou distinct du premier réseau de communication, met en oeuvre :
- ladite base de données d'annotations ; et/ou
- ladite sous-base de données d'annotations dudit utilisateur dudit terminal (100) selon la revendication 6 ; et/ou
- au moins une étape parmi les suivantes:
- ladite étape de recherche (804);
- ladite étape de liaison sémantique (804) selon la revendication 2;
- ladite étape de proposition (805, 806); et
- ladite étape de définition d'au moins un profil dudit utilisateur dudit terminal (100) selon la revendication 5.

12. Procédé de consultation selon la revendication 11, **caractérisé en ce que** ledit équipement distant appartient au groupe comprenant :
- des serveurs de fournisseurs d'annotations (103);
- des serveurs de fournisseurs de services d'annotations (102); et
- des équipements de cache (proxy) (700) compris dans ledit au moins second réseau de communication.

13. Procédé de consultation selon l'une quelconque des revendications 1 à 12 et selon la revendication 10, **caractérisé en ce que** ledit au moins un premier réseau de communication et/ou au moins un second réseau de communication selon la revendication 10 est (sont) un (des) réseau(x) de type Internet (Web, WAP ou dérivés).

14. Procédé de consultation selon l'une quelconque des revendications 1 à 13
**caractérisé en ce qu'**un fournisseur de service d'annotation (102, 700)met en oeuvre :
- ladite base de données d'annotations ;et/ou
- ladite sous-base de données d'annotations dudit utilisateur dudit terminal (100)selon la revendication 6 ; et/ou
- au moins une étape parmi les suivantes:
- ladite étape d'association (804) d'au moins une donnée de référence à au moins une annotation;
- ladite étape de recherche (804);
- ladite étape de proposition (806);
- ladite étape de liaison sémantique selon la revendication 2;
- ladite étape de définition d'au moins un profil dudit utilisateur dudit terminal selon la revendication 5;
- ladite étape de mise en relation selon la revendication 7; et
- ladite étape d'autorisation d'accès selon la revendication 7.

15. Système de consultation de données sur au moins un terminal par au moins un utilisateur, les données consultées se présentant sous la forme de pages (200) téléchargées depuis des sites distants, via au moins un premier réseau de communication, et/ou disponibles sur un support de données,
**caractérisé en ce qu'**il comprend des moyens de personnalisation desdites pages, mettant en oeuvre au moins une base de données d'annotations, indépendante desdites pages, lesdits moyens de personnalisation comprenant eux-mêmes les moyens suivants:
- moyens d'association dans ladite base de données d'au moins une donnée de référence susceptible d'être détectée parmi lesdites données consultées, à au moins une annotation ;
- moyens de recherche d'au moins une donnée de référence (202, 203) dans lesdites pages (200), ou dans au moins une portion desdites pages (200) ; et
- moyens de proposition systématique, lorsqu'une desdites données de référence est détectée par lesdits moyens de recherche parmi lesdites données consultées (200), de la au moins une annotation (300) associée dans ladite base de données à ladite donnée de référence détectée (202, 203).

16. Système de consultation de données selon la revendication 15 **caractérisé en ce qu'**un fournisseur de service d'annotation met en oeuvre au moins certains desdits moyens d'association, de recherche et/ou de proposition, de façon à fournir un service d'annotations audit au moins un utilisateur disposant dudit au moins un terminal (100).

17. Système de consultation de données selon la revendication 16 **caractérisé en ce que** ledit fournisseur de service d'annotation comprend des moyens de fourniture audit au moins un utilisateur (100)via un second réseau de communication, identique à ou distinct dudit premier réseau, et/ou via un support de données, d'au moins certains des moyens suivants :
- tout ou partie de ladite base de données d'annotations ;
- au moins un desdits moyens de recherche ; et
- au moins un desdits moyens de proposition.
